# EUROPEAN PATENT SPECIFICATION

(11) **EP 0 460 423 B1**
(45) Date of publication and mention of the grant of the patent: **09.11.1994**
(21) Application number: 91107637.0
(22) Date of filing: 10.05.1991
(51) Int. Cl.: B60G 15/06

(54) **Interconnected control arm suspension for a wheel of a vehicle**
Fahrzeugradaufhängung mit miteinanderverbundenen Lenkern
Suspension à bras interconnectés pour une roue de véhicule

(30) Priority: 15.05.1990 IT 6735390
(43) Date of publication of application: 11.12.1991
(73) Proprietor: FIAT AUTO S.p.A., 10135 Torino (IT)
(72) Inventor: Alesso, Guido, I-12038 Savigliano (IT); Perello, Gian Luigi, I-10019 Strambino (IT)
(74) Representative: Saconney, Piero

(56) References cited:
- EP-A- 0 312 649
- DE-A- 3 442 682
- DE-C- 3 434 636
- GB-A- 522 760
- GB-A- 2 100 201
- US-A- 3 193 304

## Description

The present invention relates to an interconnected control arm-type suspension suited to being used for the front wheels of a vehicle, in the case in point a motor vehicle.

Double transverse triangle suspensions are well known, which resort to a hub holder rising vertically and connected to a short upper arm. This architecture has enabled to provide a geometry with a substantially neutral behaviour, also reducing the distance between the steering axis and a plane going through the wheel centre line.

An example of suspension of this kind, corresponding to the preamble of claim 1, is known from the document US-A-3 193 304.

In this known suspension the upper end of the shock absorber is connected in an articulated manner by a yoke shaped link to a bracket which extends upwardly from the upper control arm. Due to the presence of the yoke shaped link this known arrangement does not lend itself to a totally automatic assembly of the suspension.

The object of the invention is to provide a transverse quadrilateral suspension for a vehicle wheel with the spring-shock absorber set not linked to the body in the traditional way; that is to say which can be directly linked to the suspension supporting frame so as to allow the pre-assembly.

According to the invention this object is attained by a suspension as defined in claim 1.

The invention will be more apparent from the non-limiting description of an embodiment thereof given hereinafter by way of example, with reference to the accompanying drawings in which:
Figure 1 is a perspective view of a suspension constructed according to the invention ;
Figures 2, 3 and 4 are, respectively, a longitudinal front view, a transverse front view and a top, plan view of the suspension of Figure 1 ;
Figure 5 is a scrap, sectional view, to an enlarged scale, of one element composing the suspension of Figure 1 ; and
Figure 6 illustrates a possible variant to the element of Figure 5 .

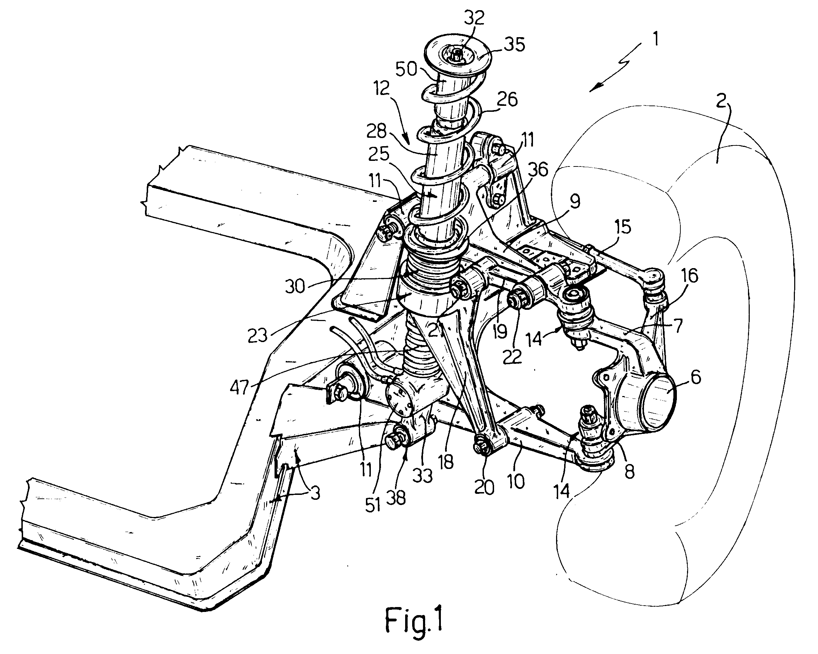

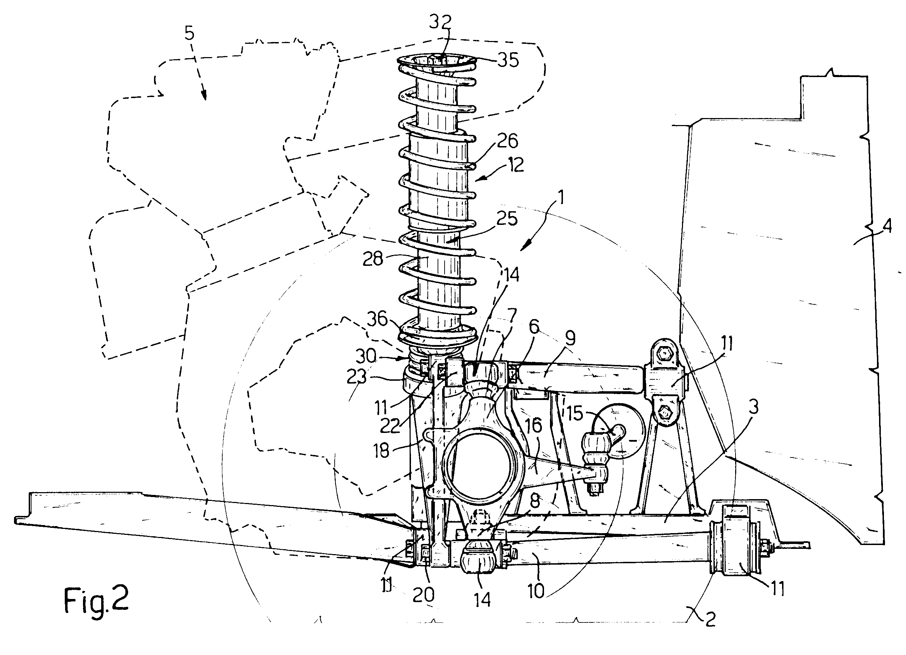

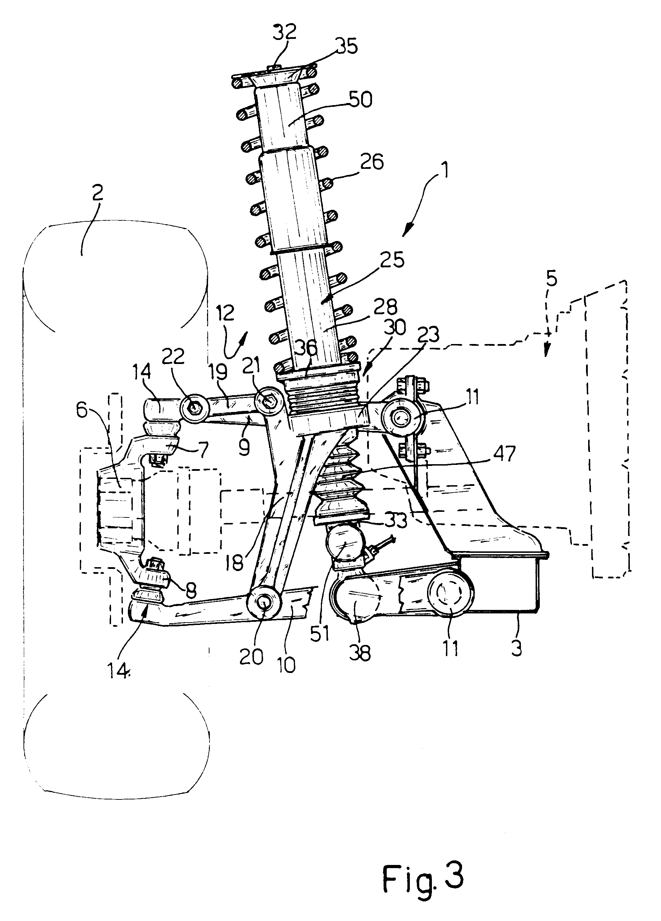

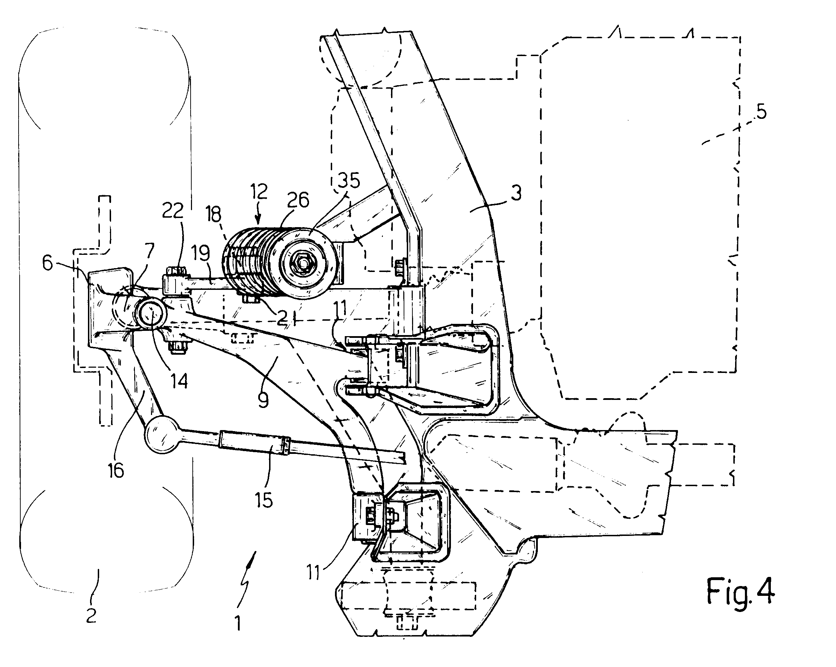

In Figures 1 to 4 the reference numeral 1 indicates overall a suspension for supporting a wheel 2 of a vehicle, in particular for supporting a front wheel of a motor vehicle of well-known type and, therefore, of which there is only illustrated a portion of the body 4 ( Figure 2 ) for simplicity; in the case in point a supporting structure defined by an auxiliary frame 3 arranged to receive more mounted suspensions 1, in the case in point the two front suspensions of the vehicle, one per side, and a well-known engine 5 of the vehicle itself, indicated by short dashes . In particular, the suspension 1 is an interconnected control arm-type suspension according to a transverse quadrilateral structure and comprises a well-known hub holder 6, provided with respective fastening brackets 7 and 8, for supporting the hub of the wheel 2, well-known and not shown for simplicity, a pair of well-known control arms 9 and 10, respective upper and lower, cross-hinged on the frame 3 by means of respective, well-known spring buffers 11, according to a well-known double transverse triangle diagram, and a spring-shock absorber set 12 ; the control arms 9 and 10 support the hub holder 6 through the brackets 7 and 8 to which they are linked by means of respective; well-known ball joints so that; in the tranverse direction to the vehicle, the structure constituted of the frame 3, the control arms 9 and 10 and the hub holder 6 behaves as an articulated quadrilateral, and so that the hub holder 6 is simultaneously free to rotate, under the thrust of a rod 15 hinged to another bracket 16 of the hub holder 6, about the axis joining the joints 14 of the brackets 7 , 8 to steer the front wheel 2 in the direction determined from the direction of translation of the steering gear rod 15 .

According to the invention, to the two control arms 9 and 10 there is hinge-linked a bracket 18 supporting, together with the frame 3, the spring-shock absorber set 12 and joining up, together with a link rod 19, the control arms 9 and 10 in an articulated manner ; in particular the bracket 18 is hinge-linked, at the bottom, directly to the control arm 10 by means of an articulation pin 20 and, at the top, it is linked, in an articulated manner, to the control arm 9, precisely through the link rod 19 which is hinge-linked at the opposite ends, on the one hand to the bracket 18 by means of a first articulation pin 21 and on the other hand to the control arm 9 by means of a second articulation pin 22 .

Level with the pin 21 the bracket 18 presents, laterally cantilever, a cup seat 23 through which there is fitted the set 12 .

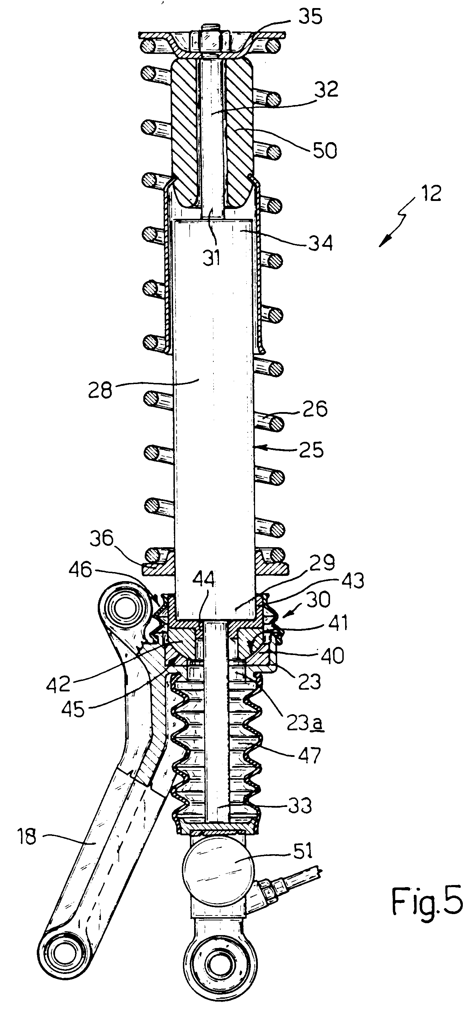

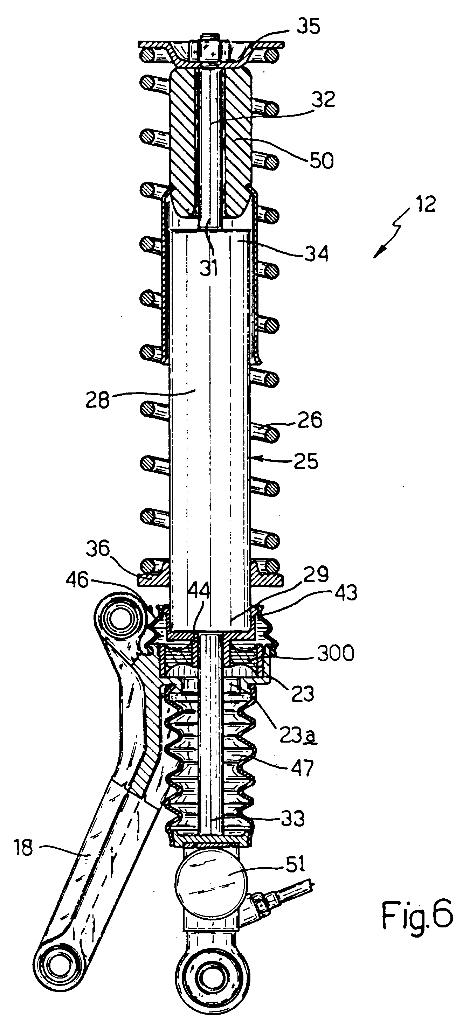

In Figures 5 and 6, which illustrate, to an enlarged scale, the detail of the bracket 18 with, mounted, two possible variants of the same set 12, the set 12 comprises a hydraulic shock absorber 25 and a helical spring 26 mounted coaxial on the shock absorber 25, on its outer face ; in particular, the shock absorber 25 comprises a hollow body 28 rigidly borne by the bracket 18 ( by means of a ball joint pad 30 - Figure 5, or by means of a spring buffer 300 performing the same functions as the joint pad 30 - Figure 6 ) at a lower end 29 of the body 28, which is inserted into the seat 23, and a sliding rod 31 fluid-tight fitted through the hollow body 29 so that a first and a second opposite ends of the rod 31, respectively indicated by 32 and 33, come axially cantilever out of respective opposite ends of the hollow body 28, in this case out of an upper end 34 and out of the lower end 29 of the latter . At said end 29, the cup seat 23 of the bracket 18 presents a perforation 23a enabling the rod 31 to go through the bracket 18, so as to enable the end 33 of the rod 31 to be linked to the frame 3 .

The spring 26 is mounted coaxial to the rod 31 and to the hollow body 28 and it is pack-tightened, with predetermined preload, between a cap 35 borne by the upper end 32 of the rod 31 and a second cap 36 fixed on the outer face of the hollow body 28, just a little above the end 29, for example welded or caulked on the body 28 ; The shock absorber 25 is hinge-linked to the bearing structure of the vehicle, in the case in point to the auxiliary frame 3, by means of an articulation pin 38 substantially parallel to the pins 20 and 22 and linking the end 33 of the rod 31 to the frame 3 . In that way the spring-shock absorber set 12 is mounted in a rocking manner on the frame 3, with the possibility of oscillations on the pin 38 according to the trajectory covered by the bracket 18 during the rebound phases of the suspension 1 subsequent to the motion of the vehicle on which it is mounted .

In order to allow said rocking motion the ball joint pad 30 (Figure 5) comprises a first collar step bearing 40 fixed inside the cup seat 23 and presenting, inside, a ring-shaped track 41 delimited by a spherical surface, and a second collar step bearing 42 on the one hand mounted rigid with a bowl 43 ( in that case driven on top of a collar 44 of the latter ) in its turn mounted rigid with the hollow body 28, driven on the lower end 29 of the latter, and on the other hand delimited by a convex hemispherical surface 45 conjugated with the track 41 and cooperating with it . Protective bellows 46 are mounted between the seat 23 and the bowl 43 to protect the step bearings 40, 42 and, on the opposite side, other bellows 47 are mounted between the seat 23 and the end 33 to protect the rod 31 .

The stroke of the rod 31 is limited by a travel bumper 50 made of elastomer, which is mounted on the end 32 of the rod 31, abutting against the cap 35, and arranged to go and cooperate in an abutting manner against the upper end 34 of the hollow body 28 ; preferably, moreover, the shock absorber 25 is of type " intelligent " as we call it, that is to say constituted of a real electronic control hydraulic actuator which is controlled in a well-known manner by a computer, not shown for simplicity, through a well-known feed device 51 of a pressurized fluid ( typically oil ) within the hollow body 28, device which, in that case, is provided rigid with the end 33 of the rod 31 .

In use, in the suspension 1 described the sollicitations originated from the spring-shock absorber 12 all directly unload on the auxiliary frame 3 through the articulation pin 38, since the vertical load, through the bracket 18 which is hinged on the lower control arm 10, goes to the hollow body 28 and, therefore, to the cap 36 on which the spring 26 rests; consequently, said load is transmitted to the cap 35, which acts as a reactioning cap, thus going to the rod 31 and from this one to the frame 3 to which the end 33 is fastened. During the rebound phases the trajectory described by the seat 23 of the bracket 18 and, consequently, the amplitude of the rocking motion of the set 12 on the pin 38 are function of the hinging position of the ends of the link rod 19 : actually, by modifying the position of the pins 20, 22 it is possible to reduce nearly to zero the oscillation of the set 12 and, in any case, said oscillation is quite forseeable during the project phase, that is why the position of the pins 20, 22 can be optimized according to the type of vehicle on which the suspension 1 is mounted .

The advantages of the invention are apparent from the aforegoing description ; the suspension 1 is very easy to mount of the body 4 and does not weigh the structure since the top of the spring-shock absorber set 12 does not have to be linked to the body itself ; besides, the overall height of the suspension described is much lower than that of a suspension of type " MacPherson ", that is why the vehicle which receives it can be constructed with a lower profile .

## Claims

1. Interconnected control arm suspension for a wheel of a vehicle, in which a hub holder (6) is linked, by means of respective fastening brackets and respective articulation devices of its own, to a first and a second control arm (9, 10), respectively upper and lower, in their turn cross-hinged, according to a double transverse triangle, to a supporting structure (3) of the vehicle,
there being a bracket (18) articulated to said upper control arm (9) by means of a link rod (19);
said bracket (18) supporting a spring-shock absorber set comprising a shock absorber (25) having a hollow body (28) rigidly supported by the bracket (18) and a sliding rod (31) fitted through the hollow body;
and a spring (26) tight-mounted between a first cap (35) borne by an end (32) of the sliding rod (31), and a second cap (23),
characterised in that
the bracket (18) is hinged-linked to said lower control arm (10), and in that
first and second opposite ends (32, 33) of the sliding rod (31) come out of respective opposite ends of said hollow body (28) of the shock absorber (25),
said second cap (23) being borne by said hollow body (28) of the shock absorber (25) and said second end (33) of the sliding rod (31) being hinged-linked to said supporting structure (3) of the vehicle.

2. Suspension as claimed in claim 1, characterised in that said bracket (18) supports said hollow body (28) of the shock absorber (25) at a lower end of the latter by means of a ball joint pad (30).

3. Suspension as claimed in claim 1, characterised in that said bracket (18) supports said hollow body (28) of the shock absorber (25) at a lower end of the latter by means of a spring buffer (300).

4. Suspension as claimed in any one of the preceding claims, characterised in that said spring is a helical spring (26) mounted coaxial with said rod (31) and with said hollow body (28) of the shock absorber (25), said first end (32) of the sliding rod (31) being provided with an elastomer bumper (50), abutting against said first cap (35), able to go and cooperate in an abutting manner against an upper end of the hollow body (28) of the shock absorber (25) to limit the stroke of the rod (31).

5. Suspension as claimed in any one of the preceding claims, characterised in that said second end (33) of the sliding rod (31) of the shock absorber (25) is provided with a feed device of a pressurised fluid inside the hollow body (28).

6. Suspension as claimed in any one of the preceding claims, characterised in that said supporting structure of the vehicle is constituted of an auxiliary frame (3) of the vehicle body for receiving said suspension (1) and an engine (5) of the vehicle.

## Patentansprüche

1. Aufhängung für ein Fahrzeugrad mit miteinander verbundenen Querlenkern, bei der ein Radträger (6) mittels entsprechender Befestigungshalter und entsprechender eigener Gelenkeinrichtungen an einem ersten und einem zweiten Querlenker (9, 10), das heißt einem oberen und einem unteren, angebracht ist, die ihrerseits in einem doppelten Querdreieck quer an einer Tragestruktur (3) des Fahrzeugs angelenkt sind,
wobei eine Stütze (18) vorhanden ist, die mittels einer Gelenkstange (19) an dem oberen Querlenker (9) angelenkt ist;
wobei die Stütze (18) eine Feder-Stoßdämpfer-Gruppe trägt, die einen Stoßdämpfer (25) mit einem hohlen Körper (28) umfaßt, der starr von der Stütze (18) getragen wird, sowie eine Gleitstange (31), die durch den hohlen Körper hindurch angebracht ist;
sowie eine Feder (26), die gespannt zwischen einer ersten Kappe (35), die von einem Ende (32) der Gleitstange (31) getragen wird, und einer zweiten Kappe (23) angebracht ist,
**dadurch gekennzeichnet**, daß
die Stütze (18) an dem unteren Querlenker (10) angelenkt ist, und dadurch, daß
das erste und zweite Ende (32, 33) der Gleitstange (31), die einander gegenüberliegen, aus entsprechenden, einander gegenüberliegenden Enden des hohlen Körpers (28) des Stoßdämpfers (25) heraustreten,
wobei die zweite Kappe (23) von dem hohlen Körper (28) des Stoßdämpfers (25) getragen wird und das zweite Ende (33) der Gleitstange (31) an der Tragestruktur (3) des Fahrzeugs angelenkt ist.

2. Aufhängung nach Anspruch 1, **dadurch gekennzeichnet**, daß die Stütze (18) den hohlen Körper (28) des Stoßdämpfers (25) an einem unteren Ende des letzteren mittels einer Kugelgelenkauflage (30) trägt.

3. Aufhängung nach Anspruch 1, **dadurch gekennzeichnet**, daß die Stütze (18) den hohlen Körper (28) des Stoßdämpfers (25) an einem unteren Ende des letzteren mittels eines Federpuffers (300) trägt.

4. Aufhängung nach einem der vorangehenden Ansprüche, **dadurch gekennzeichnet**, daß die Feder eine Schraubenfeder (26) ist, die koaxial zu der Stange (31) und zu dem hohlen Körper (28) des Stoßdämpfers (25) angebracht ist, wobei das erste Ende (32) der Gleitstange (31) mit einem aus Elastomer bestehenden Puffer (50) versehen ist, der an der ersten Kappe (35) anstößt, sich an ein oberes Ende des hohlen Körpers (28) des Stoßdämpfers (25) bewegen und an ihm anstoßend mit ihm zusammenwirken kann, um den Hub der Stange (31) zu begrenzen.

5. Aufhängung nach einem der vorangehenden Ansprüche, **dadurch gekennzeichnet**, daß das zweite Ende (33) der Gleitstange (31) des Stoßdämpfers (25) mit einer Zuführeinrichtung für ein unter Druck stehendes Fluid im Inneren des hohlen Körpers (28) versehen ist.

6. Aufhängung nach einem der vorangehenden Ansprüche, **dadurch gekennzeichnet**, daß die Tragestruktur des Fahrzeugs durch einen Hilfsrahmen (3) der Fahrzeugkarosserie gebildet wird, der die Aufhängung (1) und einen Motor (5) des Fahrzeugs aufnimmt.

## Revendications

1. Suspension à bras de commande interconnecté pour une roue de véhicule, dans laquelle un porte-moyeu (6) est reliée, au moyen de supports de fixation respectifs et de dispositifs d'articulation respectifs, à des premier et deuxième bras de commande (9, 10), respectivement supérieur et inférieur, articulés à leur tour suivant un triangle transversal double sur une structure de support (3) du véhicule,
un support (18) étant articulé sur ledit bras de commande supérieur (9) au moyen d'une biellette (19);
ledit support (18) supportant un ensemble ressort-amortisseur comportant un amortisseur (25) ayant un corps creux (28) supporté rigidement par le support (18) et une tige coulissante (31) montée dans le corps creux;
et un ressort (26) monté entre un premier siège (35) porté par une extrémité (32) de la tige coulissante (31) et un deuxième siège (23),
caractérisée en ce que
le support (18) est articulé sur ledit bras de commande inférieur (10), et en ce que
des première et deuxième extrémités opposées (32, 33) de la tige coulissante (31) sortent des extrémités opposées respectives dudit corps creux (28) de l'amortisseur (25),
ledit deuxième siège (23) étant porté par ledit corps creux (28) de l'amortisseur (25) et ladite deuxième extrémité (33) de la tige coulissante (31) étant articulée sur ladite structure de support (3) du véhicule.

2. Suspension selon la revendication 1, caractérisée en ce que ledit support (18) supporte ledit corps creux (28) de l'amortisseur (25) à une extrémité inférieure de celui-ci au moyen d'un embout à rotule (30).

3. Suspension selon la revendication 1, caractérisée en ce que ledit support (18) supporte ledit corps creux (28) de l'amortisseur (25) à une extrémité inférieure de celui-ci au moyen d'un tampon élastique (300).

4. Suspension selon l'une quelconque des revendications précédentes, caractérisée en ce que ledit ressort est un ressort hélicoïdal (26) monté coaxialement à ladite tige (31) et audit corps creux (28) de l'amortisseur (25), ladite première extrémité (32) de la tige coulissante (31) étant pourvue d'un tampon en élastomère (50), qui bute contre ledit premier siège (35), peut venir en butée contre et coopérer avec une extrémité supérieure du corps creux (28) de l'amortisseur (25) afin de limiter la course de la tige (31).

5. Suspension selon l'une quelconque des revendications précédentes, caractérisée en ce que ladite deuxième extrémité (33) de la tige coulissante (31) de l'amortisseur (25) est pourvue d'un dispositif à'alimentation en fluide sous pression à l'intérieur du corps creux (28).

6. Suspension selon l'une quelconque des revendications précédentes, caractérisée en ce que ladite structure de support du véhicule est constituée par un bâti auxiliaire (3) de la caisse du véhicule destiné à recevoir ladite suspension (1) et un moteur (5) du véhicule.
